# FASCICULE DE BREVET EUROPEEN

(11) **EP 4 540 054 B1**
(45) Date de publication et mention de la délivrance du brevet: **22.04.2026**
(21) Numéro de dépôt: 23729448.3
(22) Date de dépôt: 14.06.2023
(51) Int. Cl.: B32B 3/26, B32B 17/10, B60Q 3/208

(54) **ENSEMBLE VITRÉ POUR VÉHICULE AUTOMOBILE, PROCÉDÉ DE FABRICATION ASSOCIÉ**
GLASANORDNUNG FÜR EIN KRAFTFAHRZEUG UND ZUGEHÖRIGES HERSTELLUNGSVERFAHREN
GLAZED ASSEMBLY FOR A MOTOR VEHICLE, AND ASSOCIATED MANUFACTURING METHOD

(30) Priorité: 15.06.2022 FR 2205822
(43) Date de publication de la demande: 23.04.2025
(73) Titulaire: Saint-Gobain Sekurit France, 60150 Thourotte (FR)
(72) Inventeur: YAVARI, Keihann, 92400 COURBEVOIE (FR); KLEO, Christophe, 92400 COURBEVOIE (FR); SILVESTRINI, Laurent, 92400 COURBEVOIE (FR); BONHOMME, Mickael, 92400 COURBEVOIE (FR); LEBLANC, Diane, 92400 COURBEVOIE (FR); DROUET, Xavier, 60150 THOUROTTE (FR); DAVIS, Claire, 92400 COURBEVOIE (FR); YU, Buyin, 92400 COURBEVOIE (FR)
(74) Mandataire: Saint-Gobain Recherche
(86) Numéro de dépôt international: PCT/EP2023/066015
(87) Numéro de publication internationale: WO 2023/242300

(56) Documents cités:
- WO-A1-2022/023638
- FR-A1- 2 982 196

## Description

### Technique antérieure

La présente invention appartient au domaine général de la fabrication de vitrages illuminés. Elle concerne plus particulièrement un ensemble vitré comprenant un vitrage pour un véhicule automobile, et configuré pour illuminer ledit vitrage. Elle concerne également un procédé de fabrication d'un tel ensemble vitré. L'invention trouve une application particulièrement avantageuse, bien que nullement limitative, dans le cas où le vitrage automobile destiné à être illuminé est un toit vitré.

L'utilisation d'une source lumineuse pour illuminer (éclairer) un vitrage équipant un véhicule automobile est aujourd'hui largement répandue. De manière connue, cela peut concerner tout type de vitrage d'un tel véhicule, qu'il soit simple ou feuilleté, à savoir donc le pare-brise, la lunette arrière, une vitre latérale ou encore un toit vitré.

Un tel vitrage, lorsqu'il est illuminé, a essentiellement une fonction d'éclairage d'ambiance ou de signalisation par la lumière. Typiquement, la source lumineuse employée pour la mise en œuvre d'une telle fonction d'éclairage ou de signalisation comportent un ou plusieurs modules éclairants comprenant chacun une ou plusieurs diodes électroluminescentes (diodes LED).

Le principe général sous-tendant la réalisation d'un vitrage éclairant consiste à positionner de manière idoine la source lumineuse de sorte qu'au moins une partie de la lumière générée par cette dernière soit injectée dans une feuille de verre du vitrage. Plus particulièrement, la lumière est injectée de sorte à se propager par réflexion entre deux faces de la feuille de verre, une première face principale (par exemple orientée vers l'intérieur du véhicule) et une deuxième face principale opposée, jusqu'à atteindre des moyens d'extraction de lumière (encore appelés « moyens/éléments diffusants »).

En d'autres termes, la source lumineuse est couplée optiquement à la feuille de verre en question, cette dernière formant alors un guide de lumière (i.e. la propagation de lumière s'effectue par réflexion totale interne entre lesdites première et deuxième faces principales), est sort de ce guide en des endroits déterminés en grâce aux moyens d'extraction de lumière.

En pratique, différentes alternatives de réalisation sont conventionnellement utilisées pour implémenter ce principe d'injection de lumière.

Ainsi, selon un premier exemple, un ou plusieurs modules LED sont incorporés au niveau du bord d'une feuille de verre d'un vitrage, de façon à ce que la lumière émise par les LED entre par la tranche de ladite feuille de verre, et soit guidée par celle-ci jusqu'aux moyens d'extraction de lumière.

Selon un deuxième exemple, un ou plusieurs modules LED sont agencés en vis-à-vis de la première face principale, au moins une partie de la lumière ainsi générée étant incidente à ladite première face principale de sorte à passer au travers de la feuille de verre pour la quitter au niveau de la deuxième face principale. En outre, un élément de redirection de lumière est agencé au niveau de la deuxième face principale pour réfléchir dans la feuille de verre la lumière entrant en contact avec ledit élément de redirection.

Si ces alternatives de réalisation permettent souvent d'obtenir des résultats satisfaisants au regard de la fonction d'éclairage recherchée (ambiance ou signalisation), elles sont néanmoins problématiques en ce qu'elles génèrent des effets optiques indésirables.

En effet, une partie de la lumière générée par la source lumineuse peut ne pas être injectée dans la feuille de verre, de sorte à sortir à proximité immédiate de la surface du verre. Cette lumière non injectée dans la feuille de verre, qualifiée de « lumière rasante », est donc directement visible suivant une direction d'observation sensiblement parallèle au vitrage, ce qui crée non seulement une « pollution » lumineuse, mais a également pour défaut d'illuminer toute aspérité à la surface du verre (comme par exemple de la poussière).

Ce problème de lumière rasante peut être atténué en positionnant, dans le voisinage de la source lumineuse, un élément configuré pour bloquer la lumière qui n'est pas injectée dans la feuille de verre. Plus particulièrement, cet élément bloquant est placé en contact avec la surface vitrée, au niveau d'une des faces principales, de sorte à cacher la source lumineuse suivant une direction d'observation sensiblement parallèle au vitrage. Cette solution n'en reste pas moins déficiente en ce que ledit élément bloquant est fixé au vitrage grâce à des moyens adhésifs translucides. Dès lors, la lumière injectée dans la feuille de verre qui entre en contact avec la face à l'endroit où est positionné l'élément bloquant est extraite par ce dernier. Il en résulte un effet optique, dit « halo », localisé au niveau du contact entre l'élément bloquant et le vitrage, et également source de pollution lumineuse.

WO 2022/023 638 Al décrit des structures vitrées dans lesquelles les couches opaques sont positionnées systématiquement à l'extérieur des moyens d'extraction ou en dehors des moyens d'injection lumineuse.

### Exposé de l'invention

La présente invention a pour objectif de remédier à tout ou partie des inconvénients de l'art antérieur, notamment ceux exposés ci-avant, en proposant une solution qui permette d'injecter de la lumière dans une feuille de verre d'un vitrage automobile tout en évitant des effets optiques indésirables de type lumière rasante ou halo.

Ainsi, et selon un premier aspect, l'invention concerne un ensemble vitré comprenant :
- un vitrage pour un véhicule automobile comprenant une feuille de verre organique ou minéral présentant une première face principale ainsi qu'une deuxième face principale opposée,
- des moyens d'injection de lumière dans la feuille de verre, lesdits moyens d'injection comprenant une source lumineuse, au moins une partie de la lumière générée par la source lumineuse étant injectée dans la feuille de verre pour se propager par réflexion entre lesdites première et deuxième faces principales jusqu'à atteindre des moyens d'extraction de lumière.

Ledit ensemble vitré comporte en outre un matériau opaque en contact continu et direct avec la première face principale et positionné entre les moyens d'injection de lumière et les moyens d'extraction de lumière.

Par « contact continu », il est fait référence ici à un contact uniforme, sans disparité (i.e. sans écart) entre le vitrage et le matériau opaque. Un tel contact continu permet avantageusement d'empêcher toute fuite de lumière parasite (lumière rasante) en provenance de la source lumineuse.

En outre, par « contact direct », il est fait référence ici au fait que le contact en question entre le vitrage et le matériau opaque est réalisé sans moyens adhésifs, en particulier sans moyens adhésifs translucides. De telles dispositions sont particulièrement avantageuses en ce qu'elles empêchent toute absorption locale de lumière au niveau du contact entre le vitrage et le matériau opaque, et donc a fortiori empêchent l'apparition d'un effet halo.

Dans des modes particuliers de réalisation, l'ensemble vitré peut comporter en outre l'une ou plusieurs des caractéristiques suivantes, prises isolément ou selon toutes les combinaisons techniquement possibles.

Dans des modes particuliers de réalisation, l'ensemble vitré comporte en outre des moyens de maintien par compression du matériau opaque contre la première face principale.

Dans des modes particuliers de réalisation, les moyens de maintien comportent :
- un élément de support, par exemple une plaque, comportant une première face à laquelle la source lumineuse est fixée, ainsi qu'une deuxième face opposée, le matériau opaque étant fixé à la première face de l'élément de support,
- un élément de maintien comportant une première et une deuxième branches dites « de maintien » reliées entre elles par une branche dite « de liaison », la première branche de maintien étant fixée en appui contre la première face principale de la feuille de verre du côté opposé au matériau opaque par rapport à la source lumineuse, la deuxième branche de maintien étant fixée en appui contre la deuxième face de l'élément de support.

Dans des modes particuliers de réalisation, les moyens de maintien comportent un élément de maintien comportant une première et une deuxième branches dites « de maintien » reliées entre elles par une branche dite « de liaison », la première branche de maintien étant fixée en appui contre la première face principale de la feuille de verre du côté opposé au matériau opaque par rapport à la source lumineuse, la source lumineuse ainsi que le matériau opaque étant fixés à la deuxième branche de maintien.

Dans des modes particuliers de réalisation, la source lumineuse est agencée en vis-à-vis de la première face principale, en contact ou à distance de la première face principale, au moins une partie de la lumière générée par la source lumineuse étant incidente à la première face principale de sorte à passer au travers de la feuille de verre pour la quitter au niveau de la deuxième face principale, les moyens d'injection de lumière comportant en outre un élément de redirection de lumière agencé au niveau de la deuxième face principale et configuré pour que la lumière quittant la deuxième face principale et entrant en contact avec ledit élément de redirection est réfléchie dans la feuille de verre.

Dans des modes particuliers de réalisation, l'élément de redirection de lumière est une structure réfléchissante pourvue d'une pluralité de surfaces réfléchissantes sous la forme de surfaces inclinées, les surfaces réfléchissantes étant configurées pour que la lumière quittant la deuxième face principale et entrant en contact avec elles est réfléchie dans la feuille de verre.

Dans des modes particuliers de réalisation, la source lumineuse est agencée au moins partiellement dans un trou traversant de la feuille de verre, ladite source lumineuse étant :
- en contact avec une paroi du trou positionnée entre la source lumineuse et les moyens d'extraction de lumière, ou
- à distance des parois du trou.

Dans des modes particuliers de réalisation, le vitrage est un vitrage monolithique, ladite première face principale étant la face F1.

Dans des modes particuliers de réalisation, le vitrage est un vitrage feuilleté comportant deux feuilles de verre, une feuille externe et une feuille interne, séparées par un film intercalaire, ladite première face principale étant la face F4.

Dans des modes particuliers de réalisation, le trou traversant est réalisé dans la feuille interne.

Dans des modes particuliers de réalisation, le vitrage comporte une couche fonctionnelle, par exemple une couche réfléchissante au rayonnement infrarouge.

Dans des modes particuliers de réalisation, la feuille externe est teintée et/ou le film intercalaire est teinté au moins par sections.

Dans des modes particuliers de réalisation, la source lumineuse comporte un ou plusieurs modules éclairants, chaque module éclairant comportant une ou plusieurs diodes électroluminescentes.

Dans des modes particuliers de réalisation :
- l'injection de lumière est réalisée par couplage optique direct entre la source lumineuse et le vitrage, ou
- l'injection de lumière est réalisée au moyen d'un système optique configuré pour réaliser une fonction optique à partir de la lumière générée par la source lumineuse, par exemple un système optique de collimation.

Dans des modes particuliers de réalisation, le matériau opaque est un matériau élastique, par exemple un élastomère, un élastomère thermoplastique ou une mousse.

Dans des modes de réalisation particuliers, le matériau opaque n'est pas agencé en regard des moyens d'extraction de la lumière selon une direction sensiblement perpendiculaire au vitrage.

Dans des modes de réalisation particuliers, il est défini une zone d'extraction de la lumière comprenant l'ensemble des moyens d'extraction de la lumière et une projection de la zone d'extraction de la lumière dans un plan de projection perpendiculaire au vitrage, une projection de l'élément opaque dans ledit plan de projection étant en dehors de la projection de la zone d'extraction de la lumière.

Selon un deuxième aspect, l'invention concerne un procédé de fabrication d'un ensemble vitré. Ledit procédé comporte des étapes consistant à :
- fournir un vitrage pour un véhicule automobile comprenant une feuille de verre organique ou minérale présentant une première face principale ainsi qu'une deuxième face principale opposée,
- disposer des moyens d'injection de lumière dans la feuille de verre, lesdits moyens d'injection comprenant une source lumineuse, au moins une partie de la lumière générée par la source lumineuse étant injectée dans la feuille de verre pour se propager par réflexion entre lesdites première et deuxième faces principales jusqu'à atteindre des moyens d'extraction de lumière,
- positionner, entre les moyens d'injection de lumière et les moyens d'extraction de lumière, un matériau opaque en contact continu et direct avec la première face principale.

Dans des modes particuliers de mise en œuvre, le procédé comporte en outre une étape consistant à disposer des moyens de maintien par compression du matériau opaque contre la première face principale.

Selon un troisième aspect, l'invention concerne une utilisation d'un ensemble vitré selon l'invention dans un véhicule automobile, par exemple en tant que pare-brise, lunette, vitre latérale ou toit vitré.

Selon un quatrième aspect, l'invention concerne un véhicule automobile comportant un ensemble vitré selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig.1] la [Fig.1] représente schématiquement un mode particulier de réalisation d'un ensemble vitré selon l'invention ;
[Fig.2] la [Fig.2] représente schématiquement un autre mode particulier de réalisation d'un ensemble vitré selon l'invention ;
[Fig.3] la [Fig.3] est une vue schématique de trois quart de moyens de maintien de l'ensemble vitré de la [Fig.2], auxquels un matériau opaque est fixé ;
[Fig.4] la [Fig.4] représente schématiquement encore un autre mode particulier de réalisation d'un ensemble vitré selon l'invention ;
[Fig.5] la [Fig.5] représente schématiquement encore un autre mode particulier de réalisation d'un ensemble vitré selon l'invention ;
[Fig.6] la [Fig.6] représente sous forme d'ordinogramme les principales étapes d'un procédé de fabrication d'un ensemble vitré selon l'invention.

### Description de modes de réalisation

La présente invention s'inscrit dans le domaine de l'illumination (l'éclairage) d'un ou plusieurs vitrages d'une voiture automobile.

La suite de la description vise plus particulièrement un véhicule automobile de type voiture, par exemple une voiture électrique et/ou autonome. Par « voiture électrique », on fait référence ici à un une voiture qui comporte au moins un moteur électrique et qui, pour se mouvoir (i.e. pour faire fonctionner ledit au moins un moteur électrique), utilise uniquement l'énergie électrique embarquée dans une ou plusieurs batteries qui l'équipent.

Il importe toutefois de noter que la présente invention ne se limite pas au cas d'une voiture électrique et/ou autonome, et peut concerner indifféremment une voiture hybride ou bien encore une voiture uniquement équipée d'un moteur à combustion, celle-ci pouvant être autonome ou non.

De manière encore plus générale, le fait de considérer un véhicule automobile de type voiture ne constitue pas une limitation de l'invention, cette dernière restant applicable pour tout type de véhicule automobile, tel qu'un camion, un autobus, etc.

Pour la suite de la description, on considère également que l'illumination concerne un unique vitrage de la voiture, à savoir ici le toit de la voiture (en conséquence, le toit en question est vitré).

De telles dispositions ne constituent néanmoins qu'une variante d'implémentation de l'invention, le nombre et la nature des vitrages susceptibles d'être illuminés n'étant pas un facteur limitant. Ainsi, rien n'exclut d'envisager que tout ou partie des vitrages soient illuminés, ces derniers pouvant être l'un quelconque parmi : le pare-brise, la lunette, une vitre latérale ou le toit vitré.

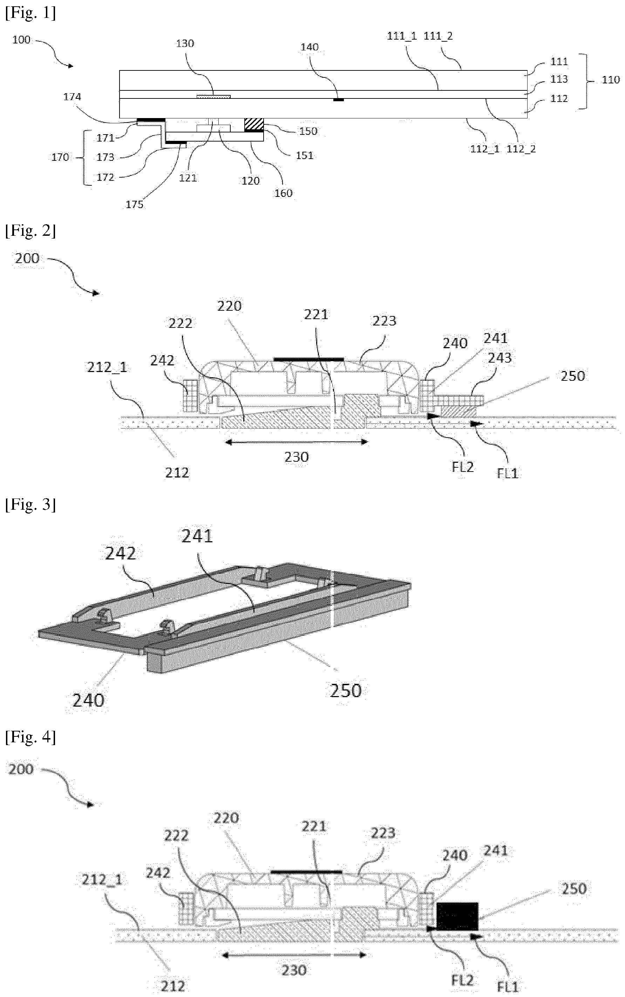

La [Fig.1] représente schématiquement un mode particulier de réalisation d'un ensemble vitré 100 selon l'invention.

L'ensemble vitré 100 comporte le toit vitré 110, la [Fig.1] correspondant à une vue selon une section transversale audit toit vitré 110. Dans le présent mode de réalisation, le toit vitré 110 est un vitrage feuilleté comportant deux feuilles de verre, une feuille externe 111 et une feuille interne 112, séparées par un film intercalaire 113.

La feuille de verre interne 112 (respectivement la feuille de verre externe 111) est destinée à être agencée côté intérieur de la voiture, c'est-à-dire en contact avec l'habitacle de la voiture (respectivement à être agencée côté extérieur de la voiture, c'est-à-dire en contact direct avec l'atmosphère extérieur de la voiture).

Chaque feuille de verre 111, 112 comporte une première face principale 111_1 destinée à être orientée vers l'intérieur de la voiture, ainsi qu'une deuxième face principale 111_2, 112_2 opposée, lesdites première et deuxième faces principales étant reliées entre elles par une tranche périphérique. De manière conventionnelle, les première et deuxième faces principales 111_1, 111_2 de la feuille externe 111 (respectivement les première et deuxième faces principales 112_1, 112_2 de la feuille interne 112) sont encore respectivement appelées face F2 et face F1 (respectivement face F4 et face F3).

Aucune limitation n'est attachée à la nature du verre utilisé pour former les feuilles de verre 111, 112. Ainsi, il peut s'agir indifféremment de verre organique ou bien minéral. Les feuilles de verre 111, 112 peuvent en outre être en verre non trempé, partiellement trempé ou trempé.

A titre d'exemples, la feuille de verre externe 111 et/ou interne 112 est réalisée en verre sodocalcique, en verre de quartz, en verre borosilicaté ou en verre alumino-silicaté. Selon d'autres exemples, la feuille de verre externe 111 et/ou interne 112 est réalisée à partir de matières plastiques rigides et transparentes, par exemple du poly-carbonate, du polyéthylène téréphtalate (PET) ou du polyméthacrylate de méthyle.

On utilisera de préférence pour la feuille interne 112 un verre minéral sodocalcique incolore tel que le verre Planilux^{®} commercialisé par la Demanderesse. La feuille interne 112 a typiquement une épaisseur comprise entre 1,4 et 3,2 mm, de préférence entre 1,4 et 2,1 mm (cette épaisseur peut varier entre 2,5 et 6 mm lorsqu'il s'agit d'un vitrage simple, i.e. monolithique et non feuilleté).

La feuille externe 111 peut bien entendu être aussi transparente et incolore que la feuille interne 112. Dans des exemples de réalisation, un vitrage feuilleté selon l'invention sera constitué de deux feuilles Planilux^{®} incolores.

Contrairement à la feuille interne 112, la feuille externe 111 est avantageusement en verre teinté, par exemple en verre Vénus^{®}, TSA3+ ou TSA4+ également commercialisés par la Demanderesse. La feuille externe 111 a typiquement une épaisseur comprise entre 1,4 et 2,1 mm.

Dans des exemples plus particuliers de réalisation (non illustrés sur les figures), ledit vitrage feuilleté peut comporter une couche fonctionnelle. Aucune limitation n'est attachée à la nature de ladite couche fonctionnelle. Par exemple, il peut s'agir d'une couche réfléchissante au rayonnement infrarouge. De manière générale, l'homme du métier sait quelles couches fonctionnelles peuvent être envisagées pour un vitrage feuilleté d'un véhicule automobile, et sait en outre où positionner (i.e. sur quelle face du vitrage) une telle couche fonctionnelle. Par conséquent, ces aspects ne sont pas décrits plus avant ici.

Le film intercalaire 113, quant à lui, est en contact adhésif avec les deux feuilles de verre 111, 112, et plus précisément avec la première face principale 111_1 de la feuille externe 111 et la deuxième face principale 112_2 de la feuille interne 111. Il peut être en n'importe quel matériau polymère transparent couramment utilisé à cette fin, par exemple en polyvinyle butyral (PVB), en polyuréthanne thermoplastique (TPU) ou en copolymère d'éthylène et d'acétate de vinyle (EVA). Il a typiquement une épaisseur comprise entre 0,2 et 1,1 mm, et peut être incolore ou bien teinté par sections ou bien entièrement.

L'ensemble vitré 100 comporte également des moyens d'injection de lumière dans le toit vitré. Plus particulièrement, dans le mode de réalisation décrit ici en référence à la [Fig.1], lesdits moyens d'injection sont configurés pour injecter de la lumière dans la feuille de verre interne 112 et comprennent une source lumineuse, au moins une partie de la lumière générée par la source lumineuse étant injectée dans la feuille de verre interne 112 pour se propager par réflexion entre lesdites première et deuxième faces principales 112_1, 112_2.

La source lumineuse peut par exemple comporter un ou plusieurs modules éclairants, chaque module éclairant comportant une ou plusieurs diodes électroluminescentes, encore dites diodes LED (« light-emitting diode » en anglais). Les diodes LED peuvent être à émission frontale ou latérale.

Un tel module éclairant comportant une diode LED 121 est représenté à titre nullement limitatif sur la [Fig.1], et comporte un support 120 avec des pistes électro-conductrices, comme une carte à circuit imprimé (« printed circuit card » en anglais), par exemple support de forme rectangulaire, sur lequel est montée la diode LED 121.

Dans le mode de réalisation de la [Fig.1], la source lumineuse est agencée en vis-à-vis de la première face principale 112_1 de la feuille interne 112. Plus particulièrement, la diode LED 121 est en contact avec ladite première face principale 112_1. Dans cette configuration, au moins une partie de la lumière générée par la source lumineuse est incidente à ladite première face principale 112_1 de sorte à passer au travers de la feuille interne 112 pour la quitter au niveau de sa deuxième face principale 112_2. En outre, les moyens d'injection de lumière comportent également un élément de redirection de lumière 130 agencé au niveau de ladite deuxième face principale 112_2 et configuré pour que la lumière quittant ladite deuxième face principale 112_2 et entrant en contact avec ledit élément de redirection 130 est réfléchie dans la feuille interne 112.

Selon un exemple plus particulier de réalisation, ledit élément de redirection de lumière 130 est une structure réfléchissante pourvue d'une pluralité de surfaces réfléchissantes sous la forme de surfaces inclinées (i.e. les surfaces inclinées sont revêtues d'une couche réfléchissante). Lesdites surfaces réfléchissantes sont configurées pour que la lumière quittant la deuxième face principale 112_2 et entrant en contact avec elles est réfléchie dans la feuille interne 112. Une telle structure réfléchissante est par exemple décrite dans le document WO2022096365 en tant que film prismatique.

Il est à noter que rien n'exclut d'envisager d'autres modes de réalisation dans lesquels la diode LED 121, et donc in fine la source lumineuse, est à distance de la première face principale 112_1 de la feuille interne 112.

En outre, le fait de considérer une illumination à partir de diodes LED ne constitue qu'une variante d'implémentation de l'invention. Rien n'exclut d'envisager une source lumineuse d'un autre type, comme par exemple une ou plusieurs diodes OLED (« organic light-emitting diode » en anglais), une ou plusieurs diodes laser, un matériau électroluminescent, etc. D'une manière générale, aucune limitation n'est attachée à la nature de la source lumineuse dès lors que celle-ci est apte à l'injection de lumière dans une feuille de verre.

Comme mentionné ci-avant, la lumière injectée dans la feuille interne 112 est destinée à se propager par réflexion entre lesdites première et deuxième faces principales 112_1, 112_2. Cette propagation est lumineuse est effectuée jusqu'à atteindre des moyens d'extraction de lumière qui, dans le présent mode de réalisation, sont configurés pour extraire et diffuser la lumière injectée dans la feuille interne 112 vers l'intérieur de la voiture.

Plus particulièrement, et tel qu'illustré par la [Fig.1] à titre nullement limitatif, lesdits moyens d'extraction sont de préférence un revêtement diffusant 140, par exemple opaque de couleur blanche ou bien transparent, situé au niveau de la deuxième face principale 112_2 de la feuille interne 112.

Le revêtement diffusant 140 peut par exemple comprendre une matrice (organique ou minérale) et des particules diffusantes, par exemple d'oxyde métallique (TiO2, etc).

Un tel revêtement diffusant 140 réalisé en matière minérale est par exemple décrit dans le document FR3084355 en tant qu'émail transparent. Alternativement, un tel revêtement diffusant 140 réalisé en matière minérale est par exemple décrit dans le document WO2022023638 en tant que couche transparente.

Il est à noter que pour des raisons de simplification de la description et de la [Fig.1], un seul revêtement diffusant 140 est ici envisagé. Cela étant, aucune limitation n'est attachée au nombre de revêtements diffusants pouvant être utilisés en tant que moyens d'extraction de lumière. Cette absence de limitation vise également la nature de ces revêtements diffusants, ainsi que leurs positions respectives vis-à-vis des feuilles de verre 111, 112 selon qu'il est souhaité d'extraire de la lumière vers l'intérieur et/ou l'extérieur de la voiture. De manière générale, ces aspects sont bien connus de l'homme du métier, et ne sont donc pas décrits davantage ici.

L'ensemble vitré 100 comporte en outre :
- un matériau opaque 150 (i.e. s'opposant au passage de la lumière) en contact continu et direct avec une face principale du vitrage 110 et positionné entre les moyens d'injection de lumière et les moyens d'extraction de lumière,
- des moyens de maintien par compression du matériau opaque contre le vitrage 110.

Par « contact continu », il est fait référence ici à un contact uniforme, sans disparité (i.e. sans écart) entre le vitrage 110 et le matériau opaque 150. Un tel contact continu, couplé à un maintien en compression dans le présent mode de réalisation, permet avantageusement d'empêcher toute fuite de lumière parasite (lumière rasante) en provenance de la source lumineuse.

En outre, par « contact direct », il est fait référence ici au fait que le contact en question entre le vitrage 110 et le matériau opaque 150 est réalisé sans moyens adhésifs, en particulier sans moyens adhésifs translucides. De telles dispositions sont particulièrement avantageuses en ce qu'elles empêchent toute absorption locale de lumière au niveau du contact entre le vitrage 110 et la matériau opaque 150, et donc a fortiori empêchent l'apparition d'un effet halo.

Plus particulièrement, dans le mode de réalisation de la [Fig.1], le matériau opaque 150 est en contact continu et direct avec la première face principale 112_1 de la feuille interne 112, les moyens de maintien étant configurés pour maintenir par compression ledit matériau opaque 150 contre ladite première face principale 112_1.

Il est à noter que si le vitrage 110 comporte une couche fonctionnelle en face F4, comme mentionné auparavant en référence à certains modes de réalisation de l'invention, le matériau opaque 150 est alors agencé en contact continu et direct avec ladite couche fonctionnelle.

Le matériau opaque 150 est par exemple un matériau élastique, par exemple un élastomère, un élastomère thermoplastique ou une mousse. Rien n'exclut cependant d'envisager, suivant d'autres exemples non détaillés ici, que le matériau opaque 150 ne soit pas élastique dès lors que celui-ci peut être agencé en contact continu et direct avec la première face principale 112_1 de la feuille interne 112. Ainsi, il est par exemple possible d'envisager un matériau opaque non compressible dont la forme est adaptée à la courbure éventuelle du vitrage 110 préalablement à l'assemblage de l'ensemble vitré 100.

Le matériau opaque 150 n'est pas agencé en regard des moyens d'extraction de la lumière selon une direction sensiblement perpendiculaire au vitrage.

Il est défini une zone d'extraction de la lumière comprenant l'ensemble des moyens d'extraction de la lumière et une projection de la zone d'extraction de la lumière dans un plan de projection perpendiculaire au vitrage. Une projection de l'élément opaque 250 dans ledit plan de projection étant en dehors de la projection de la zone d'extraction de la lumière.

Dans le mode de réalisation de la [Fig.1], les moyens de maintien comportent un élément de support 160, par exemple une plaque, comportant une première face orientée vers la première face 112_1 de la feuille interne 112. Il est à noter qu'un tel élément de support est encore connu sous la dénomination de « bracket » dans la littérature anglo-saxonne. La source lumineuse (plus particulièrement le support PCB 120 ici) est fixée à cette première face de l'élément de support 160, cette fixation pouvant être réalisée par tout moyen connu, par exemple par collage. L'élément de support comporte également une deuxième face opposée. Le matériau opaque 150 est lui aussi fixé à la première face de l'élément de support 160. Là encore, cette fixation peut être réalisée par tout moyen connu, par exemple grâce à une matière adhésive appropriée 151 comme illustré par la [Fig.1].

Outre l'élément de support 160, les moyens de maintien comportent également, dans le présent mode de réalisation, un élément de maintien 170 comportant une première et une deuxième branches dites « de maintien » 171, 172 reliées entre elles par une branche dite « de liaison » 173. Selon cette configuration, et tel qu'illustré par la [Fig.1], l'élément de maintien présente, en section transversale, un profil sensiblement en « Z ». La première branche de maintien 171 est fixée en appui contre la première face principale 112_1 de la feuille interne 112, du côté opposé au matériau opaque 150 par rapport à la source lumineuse. La deuxième branche de maintien 172, quant à elle, est fixée en appui contre une deuxième face de l'élément de support 160.

La fixation de la première branche de maintien 171 contre la première face principale 112_1 de la feuille interne 112 (respectivement la fixation de la deuxième branche de maintien 172 contre la deuxième face de l'élément de support 160) peut être réalisée par tout moyen connu, par exemple grâce à une matière adhésive appropriée 174 (respectivement une matière adhésive appropriée 175) comme illustré par la [Fig.1], ou bien encore par encapsulation de la branche de maintien 171 sur le verre.

Les moyens de maintien tels que décrits en référence à la [Fig.1] ne représentent qu'une variante d'implémentation de l'invention. Ainsi, rien n'exclut d'envisager encore d'autres variantes, comme par exemple une variante selon laquelle la source lumineuse ainsi que le matériau opaque 150 sont fixés à la deuxième branche de maintien 172 de l'élément de maintien 170. Autrement dit, dans cet autre variante, l'élément de support 160 de la [Fig.1] est absent et remplacé par ladite deuxième branche de maintien 172 dont la longueur est adaptée en conséquence.

En outre, l'invention a été décrite jusqu'à présent en considérant que la source lumineuse est agencée en vis-à-vis de la première face principale 112_1 de la feuille interne 112. De telles dispositions ne sont pas limitatives de l'invention, d'autres agencement de la source lumineuse pouvant être envisagés.

Ainsi, dans des modes particuliers de réalisation de l'invention, la source lumineuse peut être agencée au moins partiellement dans un trou traversant d'une feuille de verre, par exemple dans un trou traversant de la feuille interne lorsque le vitrage est feuilleté, ladite source lumineuse étant :
- en contact avec une paroi du trou positionnée entre la source lumineuse et les moyens d'extraction de lumière, ou
- à distance des parois du trou.

La [Fig.2] représente schématiquement un autre mode particulier de réalisation d'un ensemble vitré 200 selon l'invention.

Dans le mode de la [Fig.2], et à la manière de ce qui a été décrit en référence à la [Fig.1], le vitrage est feuilleté et correspond à un toit vitré. La [Fig.2] correspond à une vue selon une section transversale audit toit vitré. Seul la feuille interne 212 est y est représentée par souci de simplification.

Tel qu'illustré par la [Fig.2], une source lumineuse de type module LED 220 est agencée partiellement dans un trou traversant 230 pratiquée dans la feuille interne 212. Plus particulièrement, le module LED comporte :
- une diode LED 221 agencée de sorte à injecter de la lumière dans la feuille interne 212 via la paroi du trou 230,
- un guide de lumière 222 pour la lumière générée par la diode LED 221,
- un capot de protection 223.

Le module LED 220 est maintenu contre la première face principale 212_1 de la feuille interne 212 par coopération fixe ou réversible, de type connu en soi (exemple : clipsage), avec une plaque de support 240 (encore appelée « bracket » dans la littérature anglo-saxonne).

Tel qu'illustré par la [Fig.2], la plaque de support 240 comporte des parois latérales 241, 242 s'élevant de manière sensiblement orthogonale à la feuille de verre interne 212. La plaque de support 240 comporte également une bande 243 faisant saillie dans la direction où la lumière est destinée à se propager dans la feuille interne 212 (i.e. en direction des moyens d'extraction de lumière (non représentés sur la [Fig.2])). La bande 243 est par exemple réalisée de sorte à venir de matière avec la paroi latérale 241 ou bien peut encore être réalisée en tant que pièce rapportée maintenue fixement à ladite paroi latérale 241.

Par ailleurs, ladite bande 243 est agencée à distance de la première face principale 212_1 de la feuille interne 212, de sorte à présente un écart avec le vitrage. Cet écart est complété par un matériau opaque 250 répondant aux mêmes caractéristiques que celles décrites ci-avant. Ledit matériau opaque 250 est notamment fixé à ladite bande 243, par exemple grâce à des moyens adhésifs de type connu en soi. Par contre, le contact entre le matériau opaque 250 et le vitrage est continu et direct.

On comprend donc que dans ce mode de réalisation de la [Fig.2], les moyens de maintien par compression du matériau opaque 250 contre la première face principale 212_1 comportent ladite plaque support 240, notamment via ladite bande 243.

Le positionnement du module LED 220, et plus particulièrement de la diode LED 221, permet une illumination de la feuille interne 212 via la paroi du trou 230. Comme représenté sur la [Fig.2], une partie de la lumière générée est injectée dans la feuille interne 212 (flèche FL1). Toutefois, une autre partie de la lumière générée tend à s'échapper entre la plaque de support 240 et la première face principale 212_1 (flèche FL2), et représente à ce titre une lumière rasante parasite destinée à être bloquée grâce au matériau opaque 250 placé en opposition.

Pour plus de détails concernant les principes généraux relatifs à une injection de lumière dans une feuille de verre via un trou pratiqué dans cette dernière, il est possible de consulter, par exemple, le document WO2018178591.

En outre, le fait de considérer que le module LED 220 est maintenu contre la première face principale 212_1 de la feuille interne 212 par coopération avec une plaque de support 240 ne constitue qu'une variante d'implémentation de l'invention. D'autres variantes restent envisageables, comme par exemple un module LED 220 fixé directement contre la première face principale 212_1 de la feuille interne 212, la bande 243 pouvant dès lors être réalisée de sorte à venir de matière avec le capot 223 ou bien encore en tant que pièce rapportée maintenue fixement audit capot 223.

La [Fig.3] est une vue schématique de trois quart des moyens de maintien 240 de l'ensemble vitré 200 de la [Fig.2], auxquels ledit matériau opaque 250 est fixé.

La [Fig.4] représente schématiquement encore un autre mode particulier de réalisation d'un ensemble vitré selon l'invention. Plus particulièrement, le mode de réalisation de la [Fig.4] est représenté ici comme une alternative de réalisation au mode des figures 2 et 3, aucun moyen de maintien par compression n'étant utilisé ici.

A cet effet, le matériau opaque 250 est par exemple réalisé par dépôt ou injection (i.e. moulage par injection et réaction) d'une colle de type PU (polyuréthane) directement sur la première face principale 212_1 de la feuille interne 212, ou bien encore par encapsulation PU ou TPE (« thermoplastic elastomer » en anglais), ou alors par injection d'un thermoplastique.

Il est à noter que le fait d'envisager une absence de moyens de maintien par compression peut s'appliquer in fine à tous les modes envisagés dans la présente description, selon toute combinaison techniquement opérable, via les méthodes de dépôt/ injection/encapsulation susmentionnées.

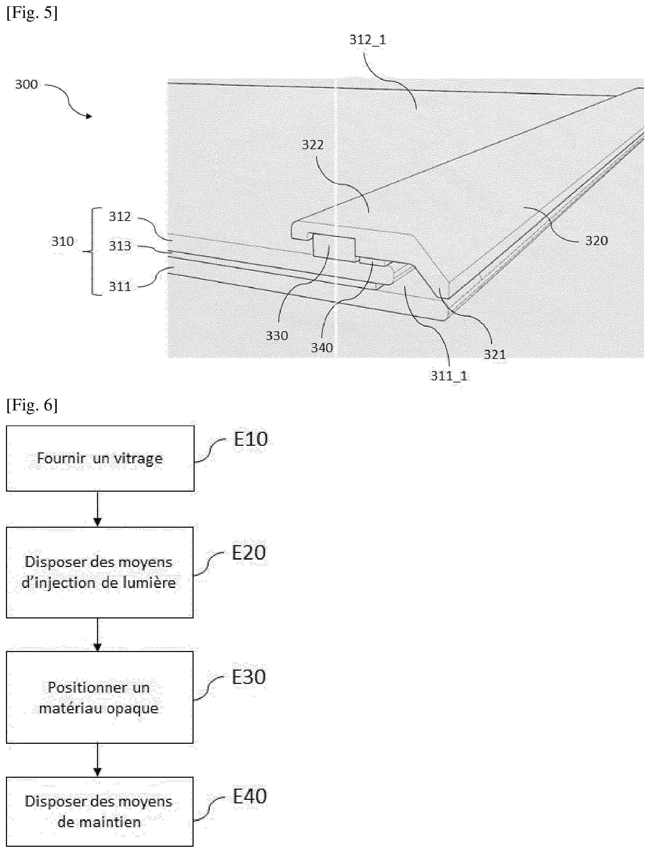

La [Fig.5] représente schématiquement encore un autre mode particulier de réalisation d'un ensemble vitré 300 selon l'invention.

Dans le mode de la [Fig.5], et à la manière de ce qui a été décrit en référence aux figures 1, 2, 3 et 4, le vitrage est feuilleté et correspond à un toit vitré 310 comportant une feuille interne 312, une feuille externe 311, et un film intercalaire 311. La [Fig.5] correspond à une vue de trois quart dudit ensemble vitré 300.

A la différence des modes décrits en référence aux figures 1, 2, 3 et 4, l'injection de lumière est ici réalisée par la tranche du vitrage (les moyens d'injection de lumière ne sont pas représentés sur la [Fig.5]).

En outre, et tel qu'illustré par la [Fig.5], l'ensemble vitré 300 comporte un élément de maintien 320 comprenant une première et une deuxième branche de maintien 321, 322, reliées entre elles, de sorte que ledit élément de maintien 320 présente, en section transversale, un profil sensiblement en « V ».

La première branche de maintien 321 est agencée fixement en appui contre la première face principale 311_1 de la feuille externe 311, cette dernière présentant un pourtour s'étendant sensiblement au-delà de celui de la feuille interne 312.

La deuxième branche de maintien 322, quant à elle, s'étend sensiblement parallèlement à la première face principale 312_2 de la feuille interne 312 ainsi qu'à distance de cette dernière, de sorte à présenter un écart avec le vitrage. Cet écart est complété par un matériau opaque 330 répondant aux même caractéristiques que celles décrites ci-avant. Ledit matériau opaque 330 est notamment fixé à ladite deuxième branche de maintien 322 (par exemple en venant se loger dans une rainure de la deuxième branche de maintien 322, comme illustré par la [Fig.5]), par exemple grâce à des moyens adhésifs de type connu en soi. Par contre, le contact entre le matériau opaque 330 et le vitrage est continu et direct.

Pour garantir un appui optimal de l'élément de maintien 320 contre le vitrage, il est possible d'utiliser, comme illustré à titre nullement limitatif par la [Fig.5], des moyens adhésifs 340 entre la deuxième branche de maintien 322 et la première face principale 312_1 de la feuille interne 312. Ces moyens adhésifs 340 sont placés entre la source lumineuse et le matériau opaque 330 de sorte que s'ils génèrent un effet halo, celui-ci est masqué par le matériau opaque 350.

On comprend donc que dans ce mode de réalisation de la [Fig.4], les moyens de maintien par compression du matériau opaque 330 contre la première face principale 312_1 comportent ledit élément de maintien 320, notamment via ladite deuxième branche 322.

Pour plus de détails concernant les principes généraux relatifs à une injection de lumière dans une feuille de verre via la tranche de cette dernière, comme cela est le cas dans le mode de réalisation de la [Fig.5], il est possible de consulter, par exemple, le document WO2010049638.

L'invention a été décrite jusqu'à présent en considérant que l'injection de lumière est réalisée dans la feuille interne du vitrage feuilleté. Toutefois, l'invention s'applique également dans le cas où cette injection de lumière est réalisée dans la feuille externe du vitrage feuilleté.

Par ailleurs, il a aussi été considéré jusqu'à présent que le vitrage dans lequel de la lumière est injectée est un vitrage feuilleté. De telles dispositions ne sont toutefois pas limitatives de l'invention, et rien n'exclut d'envisager le cas d'un vitrage monolithique, par exemple un vitrage monolithique dont la face F1 est la face avec laquelle le matériau opaque est en contact continu et direct.

Suivant encore d'autres considérations, et indépendamment du fait que le vitrage soit monolithique ou feuilleté, ou encore que l'injection de lumière soit réalisée dans une feuille interne ou externe, l'invention couvre également des modes de réalisation selon lesquels l'injection de lumière est réalisée au moyen d'un système optique configuré pour réaliser une fonction optique à partir de la lumière générée par la source lumineuse. Aucune limitation n'est attachée à la nature dudit système optique, qui peut par exemple correspondre à un système optique de collimation. L'utilisation d'un tel système optique fait donc ici référence à une injection de lumière par couplage indirect entre la source lumineuse et le vitrage. A l'inverse, le couplage optique en question peut être direct, comme cela a été décrit ci-avant dans les modes de réalisation des figures 1 à 5, à savoir donc qu'aucun système optique n'est utilisé.

Suivant encore d'autres aspects, l'ensemble vitré a été décrit jusqu'à présent comme étant intégré au véhicule automobile, c'est-à-dire comme étant fonctionnellement opérant au sein dudit véhicule. Il n'en reste pas moins que l'invention couvre également le cas d'un ensemble vitré fourni sous la forme d'un kit. A ce titre, le vitrage, les moyens d'injection de lumière, le matériau opaque et les moyens de maintien peuvent être préalablement assemblés entre eux, en tout ou partie, selon toutes combinaisons techniquement opérables. Eventuellement, tous éléments peuvent être fournis dans le kit en étant séparés les uns des autres. Un tel kit peut en outre être fourni avec une notice d'assemblage des différents éléments qui le composent.

L'invention vise également, suivant un autre aspect, un procédé de fabrication d'un ensemble vitré tel que décrit précédemment. La [Fig.6] représente sous forme d'ordinogramme les principales étapes d'un tel procédé de fabrication, qui consistent à :
- fournir E10 un vitrage pour un véhicule automobile comprenant une feuille de verre présentant une première face principale ainsi qu'une deuxième face principale opposée,
- disposer E20 des moyens d'injection de lumière dans la feuille de verre, lesdits moyens d'injection comprenant une source lumineuse, au moins une partie de la lumière générée par la source lumineuse étant injectée dans la feuille de verre pour se propager par réflexion entre lesdites première et deuxième faces principales jusqu'à atteindre des moyens d'extraction de lumière,
- positionner E30, entre les moyens d'injection de lumière et les moyens d'extraction de lumière, un matériau opaque en contact continu et direct avec la première face principale,
- disposer E40 des moyens de maintien par compression du matériau opaque contre la première face principale.

Il est à noter que l'étape E40 est optionnelle au sens de l'invention, car comme déjà mentionné auparavant, cette dernière couvre également des modes de réalisation dans lesquels il n'est pas fait usage de moyens de maintien par compression (voir la [Fig.4] à titre d'exemple).

## Revendications

1. Ensemble vitré (100, 200, 300) comprenant :
- un vitrage (110, 310) pour un véhicule automobile comprenant une feuille de verre (112, 212, 312) organique ou minéral présentant une première face principale (112_1, 212_1, 312_1) ainsi qu'une deuxième face principale opposée,
- des moyens d'injection de lumière (120, 121, 220, 221, 222, 223) dans la feuille de verre, lesdits moyens d'injection comprenant une source lumineuse, au moins une partie de la lumière générée par la source lumineuse étant injectée dans la feuille de verre pour se propager par réflexion entre lesdites première et deuxième faces principales jusqu'à atteindre des moyens d'extraction de lumière (140), ledit ensemble vitré étant **caractérisé en ce qu'**il comporte en outre un matériau opaque (150, 250, 330) en contact continu et direct avec la première face principale et positionné entre les moyens d'injection de lumière et les moyens d'extraction de lumière.

2. Ensemble vitré selon la revendication 1, dans lequel l'ensemble vitré comporte également des moyens de maintien (170, 240, 320) par compression du matériau opaque contre la première face principale.

3. Ensemble selon la revendication 2, dans lequel les moyens de maintien comportent :
- un élément de support (160), par exemple une plaque, comportant une première face à laquelle la source lumineuse est fixée, ainsi qu'une deuxième face opposée, le matériau opaque étant fixé à la première face de l'élément de support,
- un élément de maintien (170) comportant une première et une deuxième branches dites « de maintien » reliées entre elles par une branche dite « de liaison », la première branche de maintien étant fixée en appui contre la première face principale de la feuille de verre du côté opposé au matériau opaque par rapport à la source lumineuse, la deuxième branche de maintien étant fixée en appui contre la deuxième face de l'élément de support.

4. Ensemble vitré selon la revendication 2, dans lequel les moyens de maintien comportent un élément de maintien comportant une première et une deuxième branches dites « de maintien » reliées entre elles par une branche dite « de liaison », la première branche de maintien étant fixée en appui contre la première face principale de la feuille de verre du côté opposé au matériau opaque par rapport à la source lumineuse, la source lumineuse ainsi que le matériau opaque étant fixés à la deuxième branche de maintien.

5. Ensemble vitré selon l'une quelconque des revendications 1 à 4, dans lequel la source lumineuse est agencée en vis-à-vis de la première face principale, en contact ou à distance de la première face principale, au moins une partie de la lumière générée par la source lumineuse étant incidente à la première face principale de sorte à passer au travers de la feuille de verre pour la quitter au niveau de la deuxième face principale, les moyens d'injection de lumière comportant en outre un élément de redirection de lumière agencé au niveau de la deuxième face principale et configuré pour que la lumière quittant la deuxième face principale et entrant en contact avec ledit élément de redirection est réfléchie dans la feuille de verre.

6. Ensemble vitré selon la revendication 5, dans lequel l'élément de redirection de lumière est une structure réfléchissante pourvue d'une pluralité de surfaces réfléchissantes sous la forme de surfaces inclinées, les surfaces réfléchissantes étant configurées pour que la lumière quittant la deuxième face principale et entrant en contact avec elles est réfléchie dans la feuille de verre.

7. Ensemble vitré selon l'une quelconque des revendications 1 à 4, dans lequel la source lumineuse est agencée au moins partiellement dans un trou traversant de la feuille de verre, ladite source lumineuse étant :
- en contact avec une paroi du trou positionnée entre la source lumineuse et les moyens d'extraction de lumière, ou
- à distance des parois du trou.

8. Ensemble vitré selon l'une quelconque des revendications 1 à 7, dans lequel le vitrage est un vitrage monolithique, ladite première face principale étant la face F1.

9. Ensemble vitré selon l'une quelconque des revendications 1 à 7, dans lequel le vitrage est un vitrage feuilleté comportant deux feuilles de verre, une feuille externe et une feuille interne, séparées par un film intercalaire, ladite première face principale étant la face F4.

10. Ensemble vitré selon les revendications 9 et 7, dans lequel le trou traversant est réalisé dans la feuille interne.

11. Ensemble vitré selon l'une quelconque des revendications 9 à 10, dans lequel le vitrage comporte une couche fonctionnelle, par exemple une couche réfléchissante au rayonnement infrarouge.

12. Ensemble vitré selon l'une quelconque des revendications 9 à 11, dans lequel la feuille externe est teintée et/ou le film intercalaire est teinté au moins par sections.

13. Ensemble vitré selon l'une quelconque des revendications 1 à 12, dans lequel la source lumineuse comporte un ou plusieurs modules éclairants, chaque module éclairant comportant une ou plusieurs diodes électroluminescentes.

14. Ensemble vitré selon l'une quelconque des revendications 1 à 13, dans lequel :
- l'injection de lumière est réalisée par couplage optique direct entre la source lumineuse et le vitrage, ou
- l'injection de lumière est réalisée au moyen d'un système optique configuré pour réaliser une fonction optique à partir de la lumière générée par la source lumineuse, par exemple un système optique de collimation.

15. Ensemble vitré selon l'une quelconque des revendications 1 à 14, dans lequel le matériau opaque est un matériau élastique, par exemple un élastomère, un élastomère thermoplastique ou une mousse.

16. Procédé de fabrication d'un ensemble vitré, comportant des étapes consistant à :
- fournir un vitrage (110, 310) pour un véhicule automobile comprenant une feuille de verre (112, 212, 312) organique ou minérale présentant une première face principale (112_1, 212_1, 312_1) ainsi qu'une deuxième face principale opposée,
- disposer des moyens d'injection de lumière (120, 121, 220, 221, 222, 223) dans la feuille de verre, lesdits moyens d'injection comprenant une source lumineuse, au moins une partie de la lumière générée par la source lumineuse étant injectée dans la feuille de verre pour se propager par réflexion entre lesdites première et deuxième faces principales jusqu'à atteindre des moyens d'extraction de lumière (140),
- positionner, entre les moyens d'injection de lumière et les moyens d'extraction de lumière, un matériau opaque (150, 250, 330) en contact continu et direct avec la première face principale.

17. Procédé selon la revendication 16, ledit procédé comportant en outre une étape consistant à disposer des moyens de maintien (170, 240, 320) par compression du matériau opaque contre la première face principale.

18. Utilisation d'un ensemble vitré selon l'une quelconque des revendications 1 à 15 dans un véhicule automobile, par exemple en tant que pare-brise, lunette, vitre latérale ou toit vitré.

19. Véhicule automobile comportant un ensemble vitré selon l'une quelconque des revendications 1 à 15.

## Patentansprüche

1. Verglaste Einheit (100, 200, 300) umfassend:
- eine Verglasung (110, 310) für ein Kraftfahrzeug, umfassend eine Glasscheibe (112, 212, 312) aus organischem oder mineralischem Material, die eine erste Hauptfläche (112_1, 212_1, 312_1) sowie eine gegenüberliegende zweite Hauptfläche aufweist,
- Lichtinjektionsmittel (120, 121, 220, 221, 222, 223) in der Glasscheibe, die Lichtinjektionsmittel umfassend eine Lichtquelle, wobei mindestens ein Teil des Lichts, das durch die Lichtquelle generiert wird, in die Glasscheibe injiziert wird, um sich durch Reflexion zwischen der ersten und der zweiten Hauptfläche auszubreiten, bis es die Lichtextraktionsmittel (140) erreicht,
wobei die verglaste Einheit **dadurch gekennzeichnet ist, dass** sie ferner ein lichtundurchlässiges Material (150, 250, 330) in kontinuierlichem und direktem Kontakt mit der ersten Hauptfläche und positioniert zwischen den Lichtinjektionsmitteln und den Lichtextraktionsmitteln, vorweist.

2. Verglaste Einheit nach Anspruch 1, wobei die verglaste Einheit auch Haltemittel (170, 240, 320) durch Kompression des lichtundurchlässigen Materials gegen die erste Hauptfläche vorweist.

3. Einheit nach Anspruch 2, wobei die Haltemittel vorweisen:
- ein Stützelement (160), zum Beispiel eine Platte, die eine erste Fläche, an der die Lichtquelle befestigt ist, sowie eine zweite gegenüberliegenden Fläche vorweist, wobei das lichtundurchlässige Material an der ersten Fläche des Stützelements befestigt ist,
- ein Halteelement (170), das einen ersten und einen zweiten sogenannten "Halte"-Arm vorweist, die miteinander durch einen sogenannten "Verbindungs"-Arm verbunden sind, wobei der erste Haltearm gegen die erste Hauptfläche der Glasscheibe der zu dem lichtundurchlässigen Material relativ zu der Lichtquelle gegenüberliegenden Seite anliegend befestigt ist, wobei der zweite Haltearm gegen die zweite Fläche des Stützelements anliegend befestigt ist.

4. Verglaste Einheit nach Anspruch 2, wobei die Haltemittel ein Halteelement vorweisen, das einen ersten und einen zweiten sogenannten "Halte"-Arm vorweist, die miteinander durch einen sogenannten "Verbindungs"-Arm verbunden sind, wobei der erste Haltearm gegen die erste Hauptfläche der Glasscheibe der zu dem lichtundurchlässigen Material relativ zu der Lichtquelle gegenüberliegenden Seite anliegend befestigt ist, wobei die Lichtquelle sowie das lichtundurchlässige Material an dem zweiten Haltearm befestigt sind.

5. Verglaste Einheit nach einem der Ansprüche 1 bis 4, wobei die Lichtquelle gegenüber der ersten Hauptfläche, in Kontakt mit oder in Abstand zu der ersten Hauptfläche, angeordnet ist, wobei mindestens ein Teil des Lichts, das durch die Lichtquelle generiert wird, auf die erste Hauptfläche einfällt, um durch die Glasscheibe hindurchzutreten, um diese auf dem Niveau der zweiten Hauptfläche zu verlassen, wobei die Lichtinjektionsmittel ferner ein Lichtumlenkungselement vorweisen, das auf dem Niveau der zweiten Hauptfläche angeordnet und konfiguriert ist, sodass das Licht, das die zweite Hauptfläche verlässt und mit dem Lichtumlenkungselement in Kontakt kommt, in die Glasscheibe reflektiert wird.

6. Verglaste Einheit nach Anspruch 5, wobei das Lichtumlenkungselement eine reflektierende Struktur ist, die mit einer Vielzahl von reflektierenden Oberflächen in Form von geneigten Oberflächen versehen ist, wobei die reflektierenden Oberflächen konfiguriert sind, sodass Licht, das die zweite Hauptfläche verlässt und mit ihnen in Kontakt kommt, in die Glasscheibe reflektiert wird.

7. Verglaste Einheit nach einem der Ansprüche 1 bis 4, wobei die Lichtquelle mindestens teilweise in einem Durchgangsloch der Glasscheibe angeordnet ist, wobei die Lichtquelle Folgendes ist:
- in Kontakt mit einer Wand des Lochs, die zwischen der Lichtquelle und den Lichtextraktionsmitteln positioniert ist, oder
- in Abstand zu den Wänden des Lochs.

8. Verglaste Einheit nach einem der Ansprüche 1 bis 7, wobei die Verglasung eine monolithische Verglasung ist, wobei die erste Hauptfläche die Fläche F1 ist.

9. Verglaste Einheit nach einem der Ansprüche 1 bis 7, wobei die Verglasung eine Verbundverglasung ist, die zwei Glasscheiben, eine äußere Scheibe und eine innere Scheibe, vorweist, die durch eine Zwischenfolie getrennt sind, wobei die erste Hauptfläche die Fläche F4 ist.

10. Verglaste Einheit nach den Ansprüchen 9 und 7, wobei das Durchgangsloch in der inneren Scheibe realisiert ist.

11. Verglaste Einheit nach einem der Ansprüche 9 bis 10, wobei die Verglasung eine Funktionsschicht vorweist, zum Beispiel eine Infrarotstrahlung reflektierende Schicht.

12. Verglaste Einheit nach einem der Ansprüche 9 bis 11, wobei die äußere Scheibe getönt ist und/oder die Zwischenfolie mindestens abschnittsweise getönt ist.

13. Verglaste Einheit nach einem der Ansprüche 1 bis 12, wobei die Lichtquelle ein oder mehrere Beleuchtungsmodule umfasst, wobei jedes Beleuchtungsmodul eine oder mehrere Leuchtdioden vorweist.

14. Verglaste Einheit nach einem der Ansprüche 1 bis 13, wobei:
- die Lichtinjektion durch direkte optische Kopplung zwischen der Lichtquelle und der Verglasung realisiert wird, oder
- die Lichtinjektion mittels eines optischen Systems realisiert wird, das zum Realisieren einer optischen Funktion aus dem Licht, das durch die Lichtquelle generiert wird, konfiguriert ist, zum Beispiel einem optischen Kollimationssystem.

15. Verglaste Einheit nach einem der Ansprüche 1 bis 14, wobei das lichtundurchlässig Material ein elastisches Material ist, zum Beispiel ein Elastomer, ein thermoplastisches Elastomer oder ein Schaum.

16. Verfahren zum Herstellen einer verglasten Einheit, das Schritte vorweist, die in Folgendem bestehen:
- Bereitstellen einer Verglasung (110, 310) für ein Kraftfahrzeug, umfassend eine organische oder mineralische Glasscheibe (112, 212, 312), die eine erste Hauptfläche (112_1, 212_1, 312_1) sowie eine gegenüberliegende zweite Hauptfläche aufweist,
- Einrichten von Lichtinjektionsmitteln (120, 121, 220, 221, 222, 223) in der Glasscheibe, die Injektionsmittel umfassend eine Lichtquelle, wobei mindestens ein Teil des Lichts, das durch die Lichtquelle generiert wird, in die Glasscheibe injiziert wird, um sich durch Reflexion zwischen der ersten und der zweiten Hauptfläche auszubreiten, bis es die Lichtextraktionsmittel (140) erreicht,
- Positionieren, zwischen den Lichtinjektionsmitteln und den Lichtextraktionsmitteln, eines lichtundurchlässigen Materials (150, 250, 330) in kontinuierlichem und direktem Kontakt mit der ersten Hauptfläche.

17. Verfahren nach Anspruch 16, wobei das Verfahren ferner einen Schritt vorweist, der darin besteht, Haltemittel (170, 240, 320) durch Kompression des lichtundurchlässigen Materials gegen die erste Hauptfläche einzurichten.

18. Verwendung einer verglasten Einheit nach einem der Ansprüche 1 bis 15 in einem Kraftfahrzeug, zum Beispiel als Windschutzscheibe, Heckscheibe, Seitenscheibe oder verglastem Dach.

19. Kraftfahrzeug, das eine verglaste Einheit nach einem der Ansprüche 1 bis 15 vorweist.

## Claims

1. A glazed assembly (100, 200, 300) comprising:
- a glazing (110, 310) for a motor vehicle comprising a sheet of organic or inorganic glass (112, 212, 312) having a first main face (112_1, 212_1, 312_1) and a second opposite main face,
- light injection means (120, 121, 220, 221, 222, 223) in the glass sheet, said injection means comprising a light source, at least part of the light generated by the light source being injected into the glass sheet to propagate by reflection between said first and second main faces until reaching light extraction means (140),
said glazed assembly being **characterized in that** it further comprises an opaque material (150, 250, 330) in continuous and direct contact with the first main face and positioned between the light injection means and the light extraction means.

2. The glazed assembly as claimed in claim 1, wherein the glazed assembly also comprises means (170, 240, 320) for retaining the opaque material against the first main face by compression.

3. The assembly according to claim 2, wherein said retaining means comprises:
- a support element (160), for example a plate, comprising a first face to which the light source is attached, and a second opposite face, the opaque material being attached to the first face of the support element,
- a retaining element (170) comprising a first and a second "retaining" arm connected together by a "connecting" arm, the first retaining arm being attached in abutment against the first main face of the glass sheet on the side opposite the opaque material with respect to the light source, the second retaining arm being attached in abutment against the second face of the support element.

4. The glazed assembly according to claim 2, wherein the retention means comprise a retaining element having first and second "retaining" arms connected together by a "connecting" arm, the first retention arm being attached in abutment against the first main face of the glass sheet on the side opposite the opaque material with respect to the light source, the light source and the opaque material being attached to the second retaining arm.

5. The glazed assembly according to any one of claims 1 to 4, wherein the light source is arranged opposite the first main face, in contact with or at a distance from the first main face, at least part of the light generated by the light source being incident on the first main face so as to pass through the glass sheet to leave it at the second main face, the light injection means further comprising a light redirection element arranged at the second main face and configured so that light leaving the second main face and coming into contact with said redirection element is reflected in the glass sheet.

6. The glazed assembly according to claim 5, wherein the light redirection element is a reflective structure provided with a plurality of reflective surfaces in the form of inclined surfaces, the reflective surfaces being configured so that light leaving the second main face and coming into contact therewith is reflected into the glass sheet.

7. The glazed assembly according to any one of claims 1 to 4, wherein the light source is arranged at least partially in a through hole of the glass sheet, said light source being:
- in contact with a wall of the hole positioned between the light source and the light extraction means, or
- at a distance from the walls of the hole.

8. The glazed assembly according to any one of claims 1 to 7, wherein the glazing is a monolithic glazing, said first main face being the face F1.

9. The glazed assembly according to any one of claims 1 to 7, wherein the glazing is a laminated glazing comprising two sheets of glass, an outer sheet and an inner sheet, separated by an interlayer film, said first main face being face F4.

10. The glazed assembly according to claims 9 and 7, wherein the through hole is made in the inner sheet.

11. The glazed assembly according to any one of claims 9 to 10, wherein the glazing comprises a functional layer, for example a layer reflective to infrared radiation.

12. The glazed assembly according to any one of claims 9 to 11, wherein the outer sheet is tinted and/or the interlayer film is tinted at least in sections.

13. The glazed assembly according to any one of claims 1 to 12, wherein the light source comprises one or more illuminating modules, each illuminating module comprising one or more light-emitting diodes.

14. The glazed assembly according to any one of claims 1 to 13, wherein:
- light injection is achieved by direct optical coupling between the light source and the glazing, or
- light injection is achieved by means of an optical system configured to perform an optical function from the light generated by the light source, for example a collimating optical system.

15. The glazed assembly according to any one of claims 1 to 14, wherein the opaque material is an elastic material, for example an elastomer, a thermoplastic elastomer or a foam.

16. A method of manufacturing a glazed assembly, comprising the steps consisting of:
- providing a glazing (110, 310) for a motor vehicle comprising an organic or mineral glass sheet (112, 212, 312) having a first main face (112_1, 212_1, 312_1) and a second opposite main face,
- arranging light injection means (120, 121, 220, 221, 222, 223) in the glass sheet, said injection means comprising a light source, at least part of the light generated by the light source being injected into the glass sheet to propagate by reflection between said first and second main faces until reaching light extraction means (140),
- positioning, between the light injection means and the light extraction means, an opaque material (150, 250, 330) in continuous and direct contact with the first main face.

17. The method according to claim 16, said method further comprising a step consisting in arranging retention means (170, 240, 320) by compressing the opaque material against the first main face.

18. Use of a glazed assembly according to any one of claims 1 to 15 in a motor vehicle, for example as a windshield, rear window, side window or glazed roof.

19. A motor vehicle comprising a glazed assembly according to any one of claims 1 to 15.
